# EUROPEAN PATENT SPECIFICATION

(11) **EP 0 716 235 B1**
(45) Date of publication and mention of the grant of the patent: **23.08.2000**
(21) Application number: 95303366.9
(22) Date of filing: 19.05.1995
(51) Int. Cl.: F15B 13/042

(54) **Hydraulic operated valve**
Hydraulisch betätigbares Ventil
Vanne à commande hydraulique

(30) Priority: 10.11.1994 JP 27672094
(43) Date of publication of application: 12.06.1996
(73) Proprietor: KAWASAKI JUKOGYO KABUSHIKI KAISHA, Chuo-ku Kobe-shi Hyogo 650-91 (JP)
(72) Inventor: Togashi, Yoshio, Kobe-shi, Hyogo 651-22 (JP); Nakamura, Kenji, Kobe-shi, Hyogo 651-22 (JP); Iwata, Hiroshi, Kakogawa-shi, Hyogo 675-01 (JP); Sakamoto, Michisada, Akashi-shi, Hyogo 673 (JP); Yasuhara, Yutaka, Kobe-shi, Hyogo 651-22 (JP)
(74) Representative: West, Alan Harry

(56) References cited:
- EP-A- 0 117 806
- EP-A- 0 218 901
- EP-A- 0 231 876
- EP-A- 0 286 683
- EP-A- 0 364 603
- JP-Y- 4 093 501
- PATENT ABSTRACTS OF JAPAN vol. 11, no. 160 (M-592), 23 May 1987 & JP-A-61 294281 (HITACHI), 25 December 1986,

## Description

The present invention relates to a hydraulic operated valve used in construction vehicles for remote control of various actuators by means of tilting operation of an operating member such as lever and pedal, and particularly to a damping mechanism for the prevention of mis-operation due to rolling and/or vibration.

### [Prior Art]

In a construction vehicle such as hydraulic power shovel and crane, generally various operations are carried out through remote control of various actuators by means of a hydraulic operated valve of pilot type by an operator mounted on the vehicle. Various actuators and operating devices provided in the construction vehicle are large in size and heavy, and cause malfunction when the operator makes an abrupt operation, making it unable to operate normally due to substantial rolling an vibration of the vehicle body. Also rolling and vibration of the construction vehicle caused by the travel or intended operation thereof are transmitted, whether or not via the operator's hand and foot, to the hydraulic control valve causing undesirable fluctuation in the amount of operation of the hydraulic operated valve so that, as a result, the rolling and vibration of the construction vehicle are aggravated. Therefore, fluctuation in the amount of operation of the hydraulic operated valve must be made as small as possible, either when the operator operates to tilt the operating member of the hydraulic operated valve off the neutral position thereof, or when the operator operates the operating member to return it from the tilted position to the neutral position. For this reason, hydraulic operated valves equipped with damping means have been proposed.

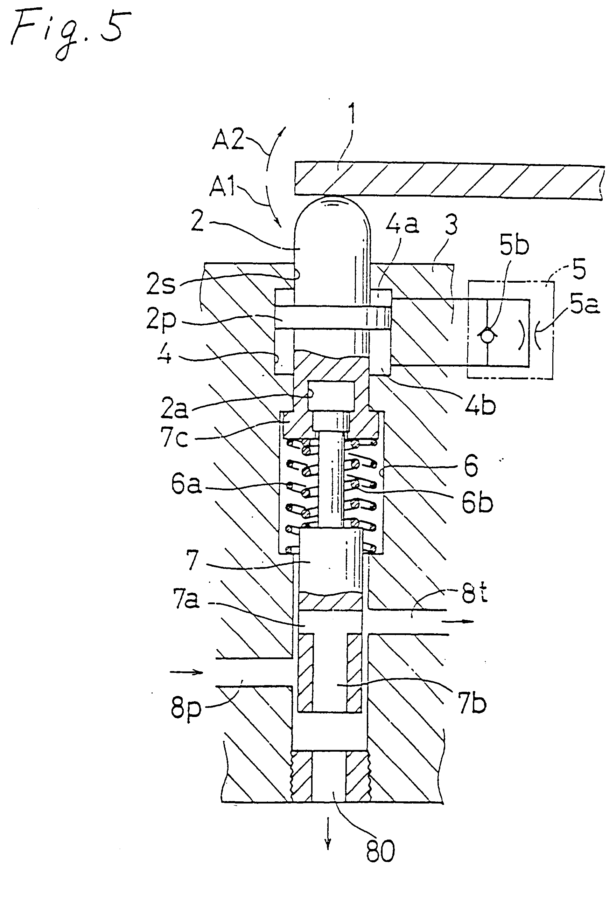

Fig.5 shows a cross sectional view of a hydraulic operated valve of a typical prior art. This prior art is disclosed in Japanese Patent Application Laid-Open Sho No.61- 294281. In this prior art, an tilting member 1 is made to tilt in a tilting direction A1 by the operation of an operating member such as pedal or lever, thereby to press an end of a push rod 2. The push rod 2 is inserted through a damper chamber 4 formed in a casing 3, whereas a piston 2p is formed in an intermediate section and a sealing section 2s of the casing 3 is inserted through the upper portion thereof. The piston 2p separates the damper chamber 4 into an upper chamber 4a and a lower chamber 4b. The upper chamber 4a and the lower chamber 4b communicate with each other via damping means 5. The damping means 5 includes a throttle 5a and a check valve 5b. Lower part of the push rod 2 is fitted into a spring chamber 6 that is formed in the casing 3. Disposed in the spring chamber 6 are a return spring 6a that presses the push rod 2 upward and a pressure spring 6b that transmits the pressing force applied from the bottom face of the push rod 2 to a spool valve 7. A top portion 7c of the spool valve 7 is fitted into a recess 2a formed at the bottom of the push rod 2. The spool valve 7 has an oil passage 7a formed at right angles to the axis thereof and an oil passage 7b extending in the axial direction from the oil passage 7a to the bottom face of the spool valve 7, both being formed thereon. The casing 3 has a pump port 8p, an output port 8o and a tank port 8t installed therein. At the neutral position shown in Fig.5, the output port 8o and the tank port 8t are communicate with each other through the spool valve 7 and the pump port 8p is shut off.

When the tilting member 1 is tilted in the tilting direction A1, the push rod 2 is pressed downward so that the spool valve 7 is pressed downward via the pressure spring 6b. As the oil passage 7a perpendicular to the axis communicates with the pump port 8p which is located below the tank port 8t, the tank port 8t is shut off while the pump port 8p and the output port 8o communicate with each other. At this time, because the hydraulic oil in the damper chamber 4 moves from the lower chamber 4b to the upper chamber 4a through the throttle 5a, damping effect can be obtained. When the tilting member 1 returns in a direction A2 which is reverse to the tilting direction A1, the push rod 2 is forced to move upward by the return spring 6a so that the hydraulic oil in the damper chamber 4 moves from the upper chamber 4a through the throttle and the check valve 5b into the lower chamber 4b. At this time, because the check valve 5b opens, resistance against the hydraulic oil flow reduces and therefore no damping effect can be obtained.

In such a prior art as described above, while damping effect is obtained only when the tilting member 1 tilts from the neutral position in the arrow A1 direction, there is such a problem that damping effect cannot be obtained when the tilting member 1 returns from the tilted position in the arrow A2 direction to the neutral position because the check valve 5b is opened at this time.

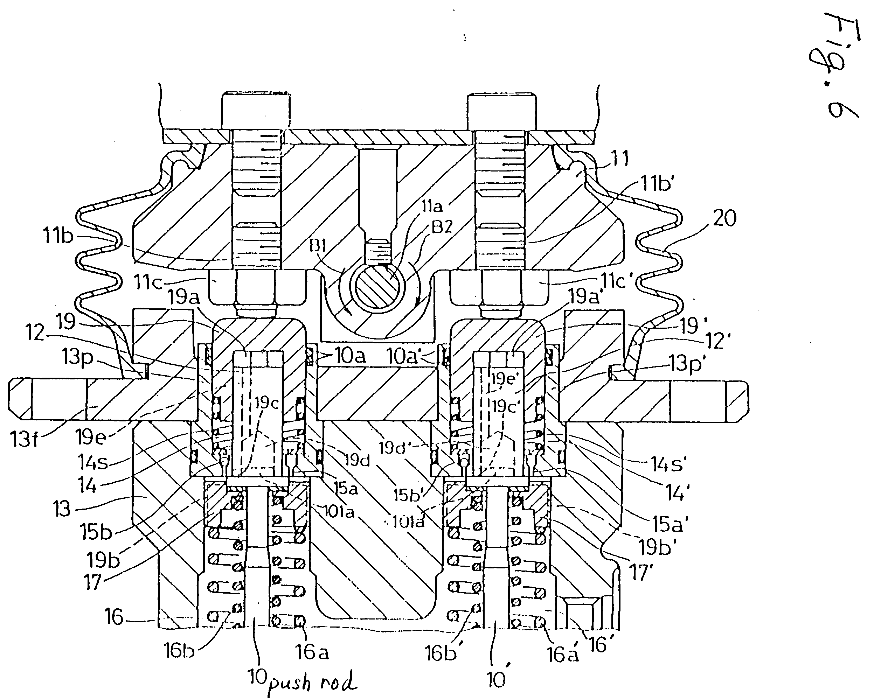

Fig.6 shows a cross sectional view of a hydraulic operated valve of another prior art. This prior art is disclosed in Japanese Utility Model Laid-Open No. Hei 4-93501. In this prior art, a cam member 11 is forced by the operation of an operating member such as pedal to tilt in two directions indicated by arrows B1 and B2 around an axis of a shaft 11a thereby to press either one of a pair of spool valves (made in integral bodies with push rods 10, 10'), not shown in the drawing, via pistons 19 or 19', auxiliary push rods 12 or 12' and push rods 10 or 10' while another one is returned. On both sides of the shaft 11a of the cam member 11, bolts 11b, 11b' are fixed by means of nuts 11c, 11c', respectively. Heads of the bolts 11b, 11b' make contact with the pistons 19, 19' each having a cross section of inverted U shape. The pistons 19, 19' have oil chambers 19a, 19a' opening downward formed therein. Hydraulic oil contained in spring chambers 16, 16' under a drain pressure is introduced into the oil chambers 19a, 19a' via grooves 19b, 19b', holes 19c, 19c', recesses 19d, 19d' and holes 19e, 19e'.

A casing 13 is fixed by means of a bracket 13f onto floor surface or the like of an operator's cabin wherein the hydraulic operated valve is installed. Installed in the damper chambers 14, 14' are damping springs 14s, 14s'. Installed at the bottom of cylinders 13p, 13p' are throttles 15a, 15a' and check valves 15b, 15b', to facilitate communication between the damper chambers 14, 14' and the spring chambers 16, 16'. Installed in the spring chambers 16, 16' are return springs 16a, 16a' that press spring receiving pieces 17, 17' upward and pressure springs 16b, 16b' that press the spool valves (not shown in the drawing) downward during operation, with top ends of the springs 16a, 16a', 16b, 16b' being in contact with the spring receiving pieces 17, 17'. Penetrating through central portions of the spring receiving pieces 17, 17' are push rods 10, 10' with heads 101a, 101a' thereof being fitted in recesses 19d, 19d' of the auxiliary push rods 12, 12'. A bellows 20 is installed across the cam member 11 and the bracket 13f, thereby to protect the inner mechanism of the hydraulic operated valve.

When the operator operates the operating member to cause the cam member 11 off the neutral position to tilt in the arrow B1 direction, one bolt 11b on the tilting direction B1 side forces the piston 19 downward with the auxiliary push rod 12 that is in contact with the piston 19 being pressed downward at the same time, so that the spring receiving piece 17 is displaced downward and the pressure spring 16b presses one spool valve downward. At this time, hydraulic oil in the damper chamber 14 is made to flow via the throttle 15a and the groove 19b into the spring chamber 16 by the downward movement of the piston 19. Resistance against the hydraulic oil flow is generated by the throttle 15a as described above, making it possible to obtain damping effect during tilting from the neutral position to the arrow B1 direction.

On the other hand, the tilting movement of the cam member 11 in the arrow B1 direction causes another bolt 11b' to move upward so that the piston 19' is forced to move upward by the damping spring 14s' and, as the inner volume of the damper chamber 14' increases, the hydraulic oil flows from the spring chamber 16 through the check valve 15b' to supplement the pressure in the damper chamber 14' while the oil chamber 19a' in the piston 19' communicates with the spring chamber 16 through the groove 19b', the hole 19c', the recess 19d' and the hole 19e', thereby to be filled with the hydraulic under the drain pressure. Thus the piston 19' is always kept in contact with the bolt 11b'.

When the operator releases the operating member such as pedal from the pressed state under such a condition as described above, the state of pressing the cam member 11 off the neutral position in the arrow B1 direction is canceled so that the spring receiving piece 17 which has been pressed downward by the auxiliary push rod 12 moves upward by the action of the return spring 16a. Thus the pressure spring 16b is released from the compressed state to cause the one of the spool valves (not shown in the drawing) to move upward and return to the neutral position. At this time, the cam member 11 tilts in the arrow B2 direction toward the neutral position and the piston 19' is pressed downward by the bolt 11b', so that the hydraulic oil in the damper chamber 14' is forced back through the throttle 15a' into the spring chamber 16.

When the cam member 11 returns from the state of being tilted in the arrow B1 direction to the neutral position, as described above, resistant force is exerted by the throttle 15a' against the hydraulic oil which flows from the damper chamber 14' into the spring chamber 16 even when an external force is exerted on the cam member 11 in the arrow B2 direction, for example, due to rolling and vibration of the vehicle body, and consequently an abrupt pressure variation is generated in the damper chamber 14' making the piston 19' unable to move quickly. This makes it possible to obtain damping effect when the operator returns the operating member to the neutral position. Also when the operating member is tilted from the neutral position in the arrow B2 direction, or when the operating member is returned from the tilted position to the neutral position, damping effect can be obtained similarly, thus solving the problems of the prior art shown in Fig.5.

### [Problems that the Invention Aims to Solve]

In such a prior art as shown in Fig.6, bubbles accumulate in the damper chambers 14, 14' and cannot be easily purged to the outside. Because such bubbles reduce the damping effect significantly, they should be purged at an early stage. Also it is necessary to contain a high pressure generated in the damper chambers 14, 14' during damping by means of the sealing members 10a, 10a', although it is difficult to achieve high reliability because the pistons 19, 19' have large diameters and make sliding motion. Further, the pistons 19, 19', the auxiliary push rods 12, 12' and the cylinders 13p, 13p' have complicated structures and lead to high production costs.

In consideration of the problems in the prior art described above, the object of the invention is to provide an improved hydraulic operated valve of high reliability and lower cost that solves the problems described above, wherein damping effect can be obtained both when an operating member is moved from a neutral position to a tilted position and when the operating member is returned from the tilted position to the neutral position.

### [Means for Solving the Problems]

The present invention provides a hydraulic operated valve, wherein one of a pair of vertically arranged spool valves is displaced by tilting an operating member so that a pump port and an output port which corresponds to one of the spool valves are made to communicate with each other by the spool valve, and another output port and a tank port are made to communicate with each other by the other spool valve, thereby to generate secondary pressure which is proportional to the amount of tilting motion of the operating member, in either one of the output ports corresponding to the tilting operation, comprising:
a cam member that tilts toward one or the other side of the neutral position, depending on the amount and direction of operating the operating member;
a pair of push rods each of which being interposed between the cam member and one of the pair of spool valves;
a pair of pistons fixed liquid-tight at intermediate positions of the push rods respectively;
a casing wherein the cam member is mounted in the upper portion, wherein a pair of piston chambers, each separated into an oil chamber formed at the top thereof by the piston and a damper chamber formed at the bottom thereof by the piston, are formed in the lower portion, a pair of throttles communicating between the oil chambers and the damper chambers being provided, and wherein a pair of spring chambers passed therethrough by the spool valves at the center thereof are formed;
a pair of partition members that separate the piston chambers and the spring chambers, and are longitudinally passed through by the push rods at the center thereof;
a pair of damping springs that energize the pistons in the direction of departing from the partition members; and
a pair of check valves that allow the hydraulic oil to move from the spring chambers to the damper chambers and prevent the hydraulic oil from moving from the damper chambers to the spring chambers.

Preferably the respective throttle is installed on the piston and the respective check valve is installed on the partition member.

A passage may be formed in the casing to communicate between the upper space of each oil chamber and the tank port.

### [Function of the Invention]

The invention also includes an hydraulic device for selectively providing a secondary pressure at a first or second port in accordance with the movement of an operating member by means of first and second push rods disposed between the operating member and respective first and second spool valves which extend into respective first and second spring chambers, wherein
first and second pistons fixed respectively to said first and second push rods in first and second piston chambers form first and second damping chambers which communicate respectively with said first and second spring chambers via first and second check valves and form first and second oil chambers which communicate respectively with said first and second damping chambers via first and second throttles.

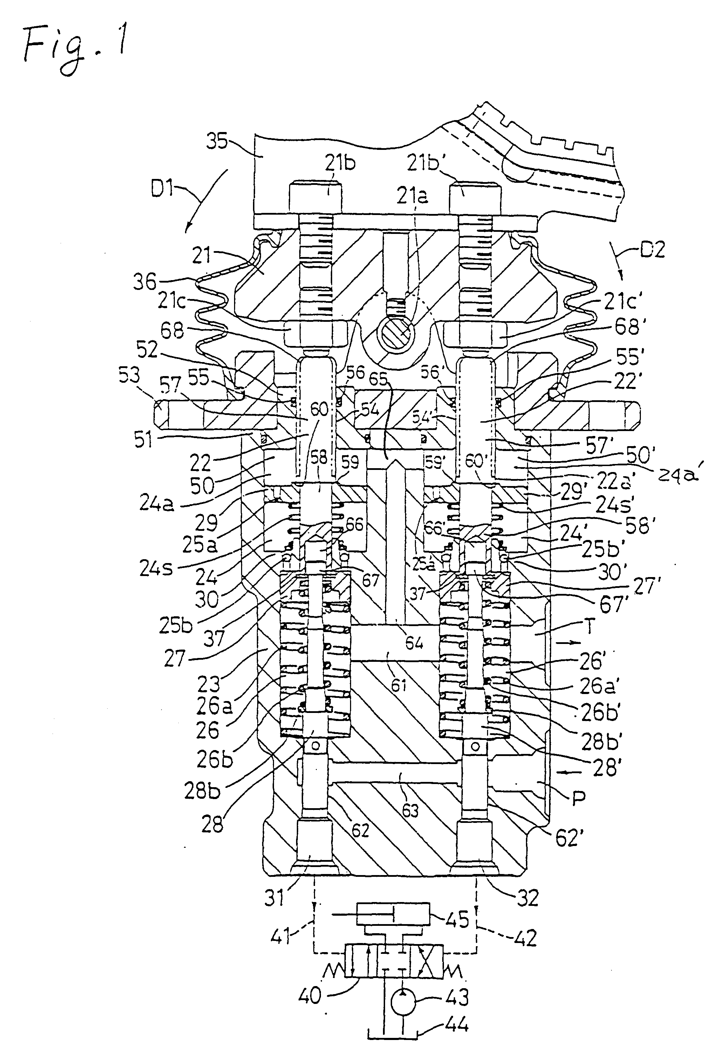

In the hydraulic operated valve forming an embodiment of the invention described hereinafter with reference to Figures 1 to 4 of the accompanying drawings a cam member is tilted from a neutral position to one or the other side by the tilting action of an operating member, and a pair of push rods are brought into elastic contact with the cam member by the spring force of damping springs. The casing has a pair of piston chambers and a pair of spring chambers each of which communicating with the corresponding one of the piston chambers, while the push rods penetrate through the corresponding piston chambers in a liquid-tight condition. The piston chamber and the spring chamber are separated by a partition member that is provided with a check valve. A piston is housed in each piston chamber, and the piston separates the piston chamber into a damper chamber and an oil chamber. Each piston has a throttle formed therein to facilitate communication between the damper chamber and the oil chamber. Each push rod has a contact portion formed on the oil chamber side with respect to the piston. Each damper chamber has a damping spring installed therein to energize each piston in a direction of departing from the partition member.

As a result, when either of the push rods is pressed by the cam member, one of the pistons is pressed downward by the contact portion thereby to reduce the inner volume of one of the damper chambers so that the hydraulic oil contained in the damper chamber is transferred through the throttle to the oil chamber side. Because the hydraulic oil in the damper chamber moves through the throttle to the oil chamber, the moving hydraulic oil experiences a significant resistance against its flow, thereby producing a damping effect. At the same time, the other push rod is forced to move upward by the spring force of the damping spring via the piston, thereby keeping the other push rod in an elastic contact with the cam member. During the upward motion of the other push rod, the spool valve corresponding to this push rod maintains the neutral position by the partition member, and therefore maintains the state of the tank port and the output port being communicating with each other. One of the spool valves displaced by one push rod on the pressured side lets the pump port and the output port communicate with each other. In this way, secondary pressure can be generated selectively in the output port of each spool valve corresponding to the tilting direction of the operating member.

When the cam member is displaced from the neutral position to one side by the operation of the operating member thereby displacing one push rod from the neutral position to a lower tilted position as described above, the other push rod is displaced from the neutral position to an upper tilted position.

When the cam member returns from one tilted position to the neutral position, one push rod is forced by one of the damper springs to move upward in contact with the cam member via the piston, while the hydraulic oil is introduced from one of the spring chambers through the check valve into one of the damper chambers thereby supplementing the pressure therein. At this time, the other push rod that has already been in contact with the cam member and forced to move up to the upper tilting position is pressed downward by the tilting movement of the cam member to the neutral position, while the other piston is forced to move down, too, so that the hydraulic oil in the other damper chamber moves through the other throttle to the other oil chamber, resulting in damping effect being produced. Thus the damping effect can be obtained regardless of whichever direction the operating member is tilted.

Also according to the embodiment, pumping function is be added to the damper chamber by providing the piston with a throttle and providing the partition member with a check valve.

Further according to the embodiment, a passage is formed for communicating upper space of each oil chamber and the tank port in the casing, thereby, bubbles in the spring chambers and in the damper chambers can be quickly led to the oil chamber at the top and bubbles accumulated in the oil chambers can be purged through the passage to the tank port. Thus stable damping effect can be obtained.

### [Embodiments]

Fig.1 is a cross sectional drawing showing the constitution of the hydraulic operated valve of one embodiment of the invention. In the operator's cabin of a construction vehicle, for example, a pedal 35 is installed as an operating member. By tilting the pedal 35, a pair of spool valves 28, 28' are displaced in opposite directions each other to facilitate communication between a pump port P and an output port 31 (or 32) corresponding to one spool valve 28 (or 28') by means of the spool valve 28 (or 28') and facilitate communication between the other output port 32 (or 31) and a tank port T by the other spool valve 28' (or 28), thereby generating secondary pressure in either one output port 31 (or 32) among the output ports 31, 32 that corresponds to the tilting operation.

The hydraulic operated valve basically comprises:
a cam member 21 that tilts from a neutral position shown in Fig.1 toward one side D1 or the other side D2 depending on the direction of operating the pedal 35;
a pair of push rods 22, 22' which make elastic contact with the cam member 21;
a casing 23 wherein a pair of piston chambers 50, 50' that are passed through by the respective push rods 22, 22' in liquid tight condition and a pair of spring chambers 26, 26' that communicate with the respective piston chambers 50, 50' are formed therein;
bulkheads 30, 30' which are a pair of partition members housed in the respective piston chambers 50, 50' and separate the piston chambers 50, 50' and the spring chambers 26, 26';
a pair of pistons 29, 29' that are penetrated by the push rods 22, 22' in the respective piston chambers 50, 50' and separate the piston chambers 50, 50' into damper chambers 24, 24' and oil chambers 24a, 24a', while being provided with throttles 25a, 25a' that facilitate communication between the damper chambers 24, 24' and the oil chambers 24a, 24a' being formed thereon;
a pair of check valves 25b, 25b' installed in the bulkheads 30, 30', respectively, to allow movement of the hydraulic oil from the spring chambers 26, 26' to the damper chambers 24, 24' and shut off movement of the hydraulic oil from the damper chambers 24, 24' to the spring chambers 26, 26';
a pair of damping springs 24s, 24s' for spring-loading the pistons 29, 29' to depart from the bulkheads 30, 30' in the respective damper chambers 24, 24';
a pair of pressure springs 26b, 26b' which are housed in the respective spring chambers 26, 26' and transmit the descending displacements of the push rods 22, 22' to the respective spool valves 28, 28'; and
a pair of return springs 26a, 26a' which are housed in the respective spring chambers 26, 26' and spring-loading the push rods 22, 22', that have been pressed downward by the cam member 21, upward by means of spring force.

The cam member 21 can tilt in the directions of arrows D1 and D2 around the axis of the shaft 21a, while the neutral state is as shown in Fig.1. Fixed on both sides of the cam member 21 in the tilting directions D1 and D2 with respect to the shaft 21a are a pair of bolts 21b, 21b' by means of nuts 21c, 21c', respectively. Tips of the bolts 21b, 21b' are in contact with the top ends of the push rods 22, 22', respectively. The return springs 26a, 26a' are interposed between the bottom faces of the spring chambers 26, 26' and the lower faces of the spring receiving pieces 27, 27'. The return springs 26a, 26a' spring-load upwardly the spring receiving pieces 27, 27' under a condition of being supported on the bottom faces of the spring chambers 26, 26'. The pressure springs 26b, 26b' set inside the return springs elastically press the spool valves 28, 28' under the condition of being supported on the bottom faces of the spring receiving pieces 27, 27' near the centers thereof.

The casing 23 has a casing body 51 and a lid 52 that closes an opening of the casing body 51 in liquid-tight condition. Fixed on the lid 52 is a bracket 53 that supports both ends of the shaft 21a, while the bracket 53 is fixed on the floor or the like of the operator's cabin. The lid 52 has through holes 54, 54' where the push rods 22, 22' pass through and annular grooves 55, 55' opening toward the inner circumferential surfaces of the through holes 54, 54' being formed thereon. Fitted in the grooves 55, 55' are annular low-pressure sealing members 56, 56', respectively. These low-pressure sealing members 56, 56' make elastic contact with outer circumferential surfaces of the respective push rods 22, 22' over the entire circumference in the circumferential direction. The low-pressure sealing members 56, 56' achieve air-tight sealing of the oil chambers 24a, 24a' from the outer space.

The push rods 22, 22' have large diameter sections 57, 57' as contact sections that make sliding contact with the low-pressure sealing members 56, 56' and small diameter sections 58, 58', while contact faces 60, 60', whereon end faces 59, 59' of the pistons 29, 29' facing the oil chambers 24a, 24a' make contact, are formed to protrude outward in the radial direction from the small diameter sections between the large diameter sections 57, 57' and the small diameter sections 58, 58'. These contact faces 60, 60' are formed in a plane perpendicular to the axes of the push rods 22, 22'. Because the push rods 22, 22' are constituted of the large diameter sections 57, 57' and the small diameter sections 58, 58', as described above, they can be machined easily thereby improving the productivity.

Formed at the bottom of the casing 23 are the pair of output ports 31, 32. Formed on one side of the casing 23 are a pump port P and a tank port T communicating with the spring chambers 26a, 26a'. Tilting displacement of the cam member 21 is carried out by the operator operating a pedal 35 mounted above the cam member 21. In order to allow the tilting displacement of the cam member 21 and protect the inner mechanism, a bellows 36 is mounted across the cam member 21 and the bracket 53.

In the neutral condition shown in Fig.1, the push rods 22, 22' are forced upward together with the pistons 29, 29' by the damping springs 24s, 24s', to bring the top ends thereof into contact with the end faces of the bolts 21b, 21b', thereby to prevent the displacement thereof. Bottom ends of the push rods 22, 22' are supported by the spring receiving pieces 27, 27' via split washers 37, 37'. The spring receiving pieces 27, 27' are pressed upward by the return springs 26a, 26a' with the upper ends being kept in contact with the bulkheads 30, 30'.

The casing body 51 of the casing 23 has a first passage 61 that facilitates communication between the tank port T and the spring chambers 26, 26', a second passage 63 that facilitates communication between the pump port P and valve chambers 62, 62' through which the respective spool valves 28, 28' are inserted, a third passage 64 that rises from the first passage 61 upward and a fourth passage 65 that communicates with the third passage 64 at right angle and communicates with the upper space of the oil chambers 24a, 24a', being formed therein. These passages 61, 64, 65 enable it to purge bubbles consisting of gases such as air and hydraulic oil vapor from the oil chambers 24a, 24a' to the tank port T, as the hydraulic oil flows.

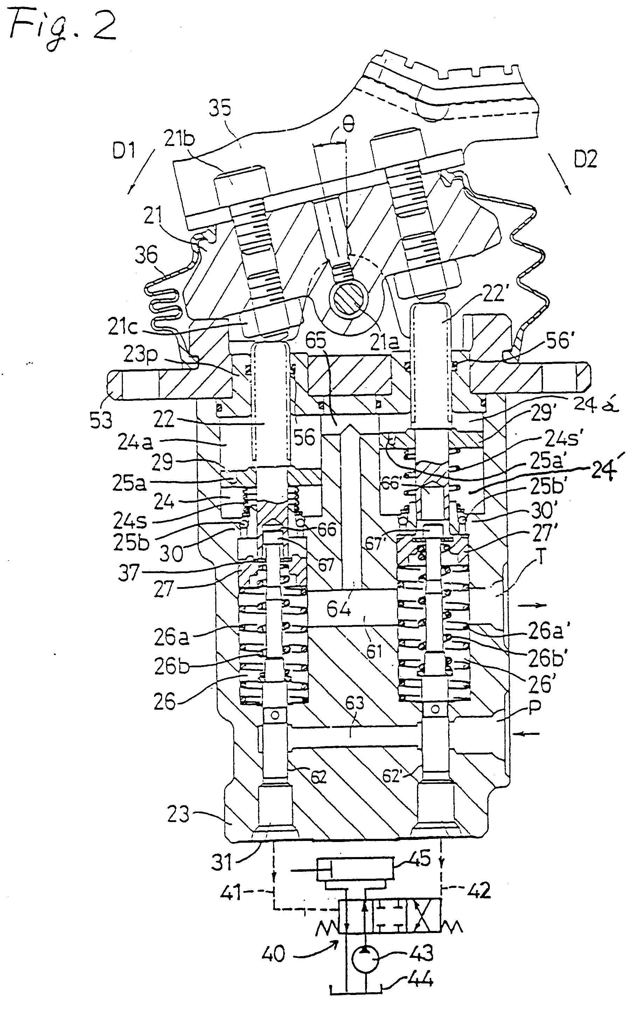

Fig.2 shows the cam member 21 being tilted to the side of one output port 31 by the operator's operation of the pedal 35. The push rod 22 is pressed down on the side of one output port 31, and the push rod 22' is pressed up on the side of the other output port 32. When the push rod is pressed down, the piston 29 is also pressed down by the contact surface 60 of the push rod 22, so that the hydraulic oil contained in the damper chamber 24 located between the piston 29 and the bulkheads 30 is discharged through the throttle 25a made in the piston 29 to the oil chamber 24a then to the outside tank.

When the pedal 35 is operated to move from the neutral position to the tilted position in the arrow D1 direction as described above, damping effect can be obtained even when the vehicle experiences rolling and vibration, because the hydraulic oil passes through the throttle 25a. On the other hand, the push rod 22' and the piston 29' on the side of the other output port 32 are pressed up by the damping spring 24s' so that the hydraulic oil is supplied from the tank to the damper chamber 24' through the check valve 25b' installed on the bulkhead 30'. On the output port 31 side, the push rod 22 presses down the spool valve 28 via the washer 37, the spring receiving piece 27 and the pressure spring 26b, thereby generating the secondary pressure.

When the pedal 35 is operated to return from the position of tilted by an angle as shown in Fig.2 to the neutral position, the push rod 22 and the piston 29 on the side of one output port 31 are pressed up by the damping spring 24s, while the push rod 22' and the piston 29' on the side of the other output port 32 are pressed down. When the piston 29' on the output port 32 side is pressed down, the hydraulic oil is discharged through the throttle 25a' to the tank, and therefore such a damping effect as described previously can be obtained.

When the pedal 35 is either tilted from the neutral position in the arrow D1 direction as described above, or returned from the tilted position in the arrow D2 direction to the neutral position, the hydraulic oil contained in the damper chambers 24, 24' moves through the throttles 25a, 25a' to the oil chambers 24a, 24a'. Therefore even when the operation of the pedal 35 in the arrow D1 or arrow D2 direction is abrupt or when in under the action of rolling or vibration, significant flow resistance is exerted by the throttles 25a, 25a' against the hydraulic oil that flows from the damper chambers 24, 24' to the oil chambers 24a, 24a', thereby making it possible to prevent the hydraulic oil from moving quickly and to achieve damping effect even when the pedal 35 is operated abruptly or the vehicle is under rolling or vibration. Also because the oil chambers 24a, 24a' communicate with the tank port T, the sealing members 56, 56' may be of low-pressure type to achieve high liquid tightness without the need for a complicated constitution using high-pressure sealing members, thereby significantly improving the reliability with regard to oil sealing and making it possible to manufacture the hydraulic operated valve at a low cost. Further, because the push rods 22, 22' are inserted through the pistons 29, 29' while the pistons 29, 29' are supported by the contact surfaces 60, 60' and the sealing members 56, 56' brought into sliding contact with the large diameter sections 57, 57' of the push rods 22, 2 2' to achieve the liquid tightness, the sealing members 56, 56' may be of smaller diameters which leads to simplification of the constitution, too. Moreover, because the first, third and fourth passages 61, 64, 65 that communicate with the upper space of the oil chambers 24a, 24a' are formed in the casing 23 to communicate with the tank port T, accumulation of bubbles such as air and vaporized hydraulic oil in the oil chambers 24a, 24a' can be prevented thereby achieving stable damping effect.

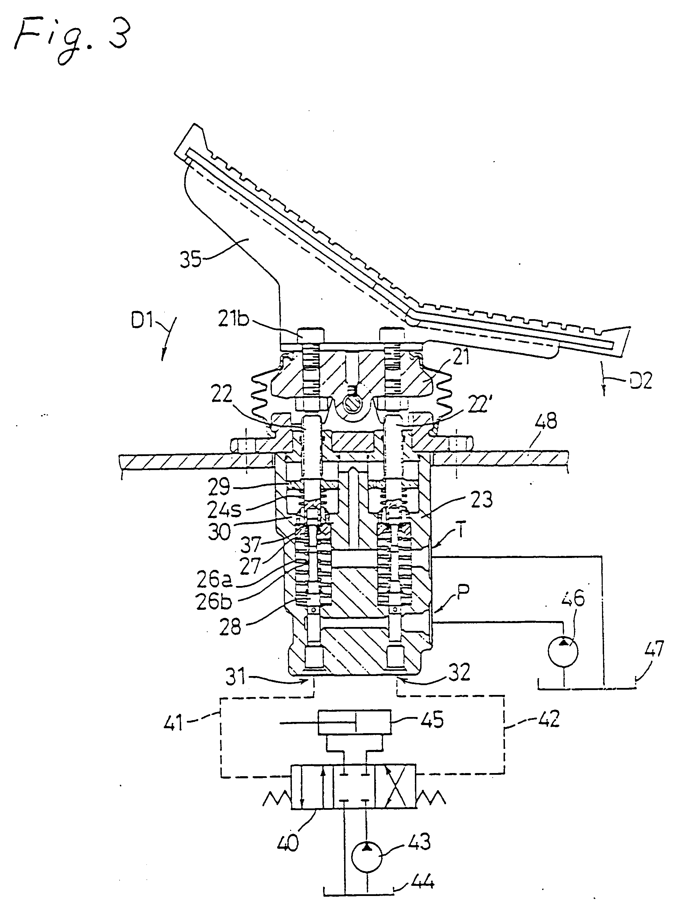

Fig.3 shows a basic configuration of a hydraulic control system using the hydraulic operated valve of the embodiment shown in Fig.1. The output ports 31, 32 are connected to pilot ducts 41, 42 of a switching valve 40, while the switching valve 40 is installed between a pump 43, a tank 44 and an actuator 45. The actuator 45 comprises a hydraulic motor that drives a crawler unit as a construction vehicle or a lifting hydraulic cylinder of a hydraulic power shovel. Connected to the pump port P is a pump 46 for the control of pilot hydraulic pressure, and the tank port T is connected to the tank 47.

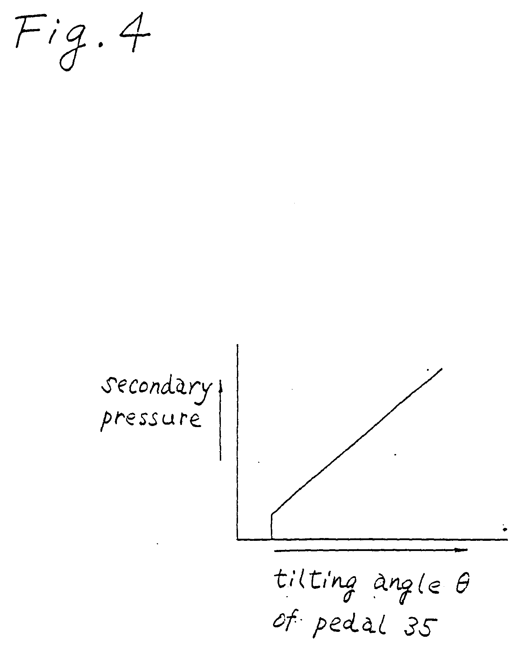

Fig.4 shows the operating characteristic of the embodiment shown in Fig.1. The figure shows, in conjunction with Fig.1, that tilting of the cam member 21 causes secondary pressure in proportion to the tilting angle to be generated in the output ports 31, 32. The push rods 22, 22' have recesses 66, 66' formed at the bottom thereof, while top portions 67, 67' of the spool valves 28, 28' are fitted into the recesses 66, 66'. The recess 66 of one push rod 22 is formed with such a depth that allows the top portion 67 of the spool valve 28 enter therein to a certain extent as shown in Fig.2 on the output port 31 side. The recess 66' at the bottom of the push rod 22' and the top portion 67' of the spool valve 28' are allowed to depart from each other as shown in Fig.2 on the output port 32 side.

Although the push rods 22, 22' are constituted from the large diameter sections 57, 57' and the small diameter sections 58, 58' to form the contact surfaces 60, 60' so that the contact surfaces 60, 60' press against the pistons 29, 29' in the embodiments described above, the invention may be embodied as described below in another embodiment: the push rods 22, 22' are made in right cylinders as indicated by imaginary lines 68, 68' in Fig.1, with locking projections being formed as contact pieces in arc configuration or at intervals in the circumferential direction to protrude from the periphery, thereby to press the pistons 29, 29' and prevent them from coming off.

Also the piston and the push rod may be made in an integral body as further another embodiment.

### [Effect of the Invention]

According to the embodiment, as described above, the hydraulic operated valve wherein the operating member is tilted to either side of the neutral position makes it possible to obtain damping effect when the cam member is tilted, because pistons are supported by contact surfaces formed on the push rods while the damping springs are interposed between the pistons and the partition members so that, when one push rod is pressed downward by the motion of the cam member tilting according to the operation of the operating member, the lower push rod is kept being pressed upward and the piston is pressed downward together with the other push rod that has been pressed down, thereby causing the hydraulic oil contained in the damper chamber to flow through the throttle formed in the piston into the oil chamber. When the cam member returns from the tilted position to the neutral position, the push rod that has been pressed down and the piston are pressed up by the damping spring while the other push rod that has been already in the state of being pressed up presses down the piston thereby to cause the hydraulic oil in the damper chamber to move through the throttle into the oil chamber, and therefore the damping effect can be obtained when the cam member returns from the tilted position to the neutral position, too. Also because the push rod is inserted through the piston and the push rod is brought into contact with the cam member, the oil chamber communicating with the tank port can be formed above the piston thereby to eliminate the need to provide excessively high liquid tightness between the casing and the push rods, thus resulting in simplified constitution. Further, because the piston is supported by the contact portion of the push rod under such a condition that the push rod is inserted through the piston while the damper chamber and the oil chamber are formed on either side of the piston, it is made possible to reduce the number of component parts, simplify the constitution and increase the degree of freedom in the design.

Also because the piston is provided with the throttle and the partition member is provided with the check valve, pumping function can be added to the damper chamber.

Further because the passage for the communication between the upper space of the oil chamber and the tank port is formed in the casing, bubbles generated in the oil chamber can be purged to the external atmosphere through the passage and the tank port, thereby preventing the accumulation of bubbles in the oil chamber and achieving stable damping effect.

### [BRIEF DESCRIPTION OF THE DRAWINGS]

Figure 1 is a cross sectional view of a key portion of one embodiment of the invention.
Figure 2 is a cross sectional view of a key portion under tilted condition of the embodiment shown in figure 1.
Figure 3 is a circuit diagram of the hydraulic control device using the hydraulic operated valve of the embodiment shown in figure 1.
Figure 4 is a graph showing the operation characteristic of the embodiment shown in figure 1.
Figure 5 is a cross sectional view of a key portion of a prior art.
Figure 6 is a cross sectional view of a key portion of another prior art.

### [DESCRIPTION OF REFERENCE NUMERALS]

- 21:: Cam member
- 22, 22':: Push rods
- 23:: Casing
- 23p:: Lid
- 24, 24':: Damper chambers
- 24a, 24a':: Oil chambers
- 24s, 24s':: Damping springs
- 25a, 25a' :: Throttles
- 26b, 26b' :: Pressure springs
- 28, 28' :: Spool valves
- 29, 29' :: Pistons
- 30, 30' :: Bulkheads
- 31, 32' :: Output ports
- P :: Pump port
- T :: Tank port

## Claims

1. A hydraulic operated valve, wherein one of a pair of vertically arranged spool valves (28, 28') is displaced selectively by tilting an operating member (35) so that a pump port (P) and an output port (31) corresponding to that one (28) of the spool valves are made to communicate with each other by the spool valve, and another output port (32) and a tank port (T) are made to communicate with each other by the other spool valve (28'), thereby to generate secondary pressure which is proportional to the amount of tilting motion of the operating member (35), in either one of the output ports corresponding to the tilting operation,
comprising:
a cam member (21) that tilts toward one or the other side of a neutral position, depending on the amount and direction of operating the operating member (35);
a pair of push rods (22, 22') each of which being interposed between the cam member and one of the pair of spool valves;
a pair of pistons (29, 29') fixed at intermediate positions of the push rods respectively in liquid tight condition;
a casing (23) wherein the cam member (21) is mounted in the upper portion, wherein a pair of piston chambers (50, 50'), each separated into an oil chamber (24a, 24a') formed at the top thereof by the piston and a damper chamber (24, 24') formed at the bottom thereof by the piston, are formed in the lower portion, a pair of throttles (25a, 25a') each letting the oil chambers (24a, 24a') and the damper chambers (24, 24') communicate with each other, and wherein a pair of spring chambers (26, 26') passed therethrough by the spool valves at the center thereof are formed;
a pair of partition members (30, 30') that separate the piston chambers and the spring chambers, and are longitudinally passed through by the push rods at the center thereof;
a pair of damping springs (24s, 24s') that energize the pistons in the direction to depart from the partition members; and
a pair of check valves (25b, 25b') that allow the hydraulic oil to move from the spring chambers to the damper chambers and prevent the hydraulic oil from moving from the damper chambers to the spring chambers.

2. The hydraulic operated valve as claimed in claim 1 wherein the respective throttle (25a, 25a') is installed on the piston (29, 29') and the respective check valve (25b, 25b') is installed on the partition member (30, 30').

3. The hydraulic operated valve as claimed in claim 1 wherein a passage (61, 64, 65) is formed in the casing (23) to facilitate communication between the upper space of each oil chamber and the tank port.

4. An hydraulic device for selectively providing a secondary pressure at a first or second port (31, 32) in accordance with the movement of an operating member (35) by means of first and second push rods (22, 22') disposed between the operating member (35) and respective first and second spool valves (28, 28') which extend into respective first and second spring chambers (26, 26'), wherein
first and second pistons (29, 29') fixed respectively to said first and second push rods (22, 22') in first and second piston chambers (50, 50') form first and second damping chambers (24, 24') which communicate respectively with said first and second spring chambers via first and second check valves (25b, 25b') and form first and second oil chambers (24a, 24a') which communicate respectively with said first and second damping chambers via first and second throttles (25a, 25a').

## Patentansprüche

1. Hydraulisch betätigtes Ventil, wobei ein Schieberventil eines Paars vertikal angeordneter Schieberventile (28, 28') durch Neigen eines Betätigungselements (35) wahlweise verschoben wird, so daß ein Pumpanschluß (P) und ein Ausgangsanschluß (31), die dem einen (28) der Schieberventile entsprechen, durch das Schieberventil miteinander verbunden werden, und ein weiterer Ausgangsanschluß (32) und ein Tankanschluß (T) durch das andere Schieberventil (28') miteinander verbunden werden, wodurch in einem der Ausgangsanschlüsse, der der Neigungsbetätigung entspricht, ein Sekundärdruck erzeugt wird, der zum Betrag der Neigungsbewegung des Betätigungselements (35) proportional ist, mit
einem Nockenelement (21), das in Abhängigkeit vom Betrag und der Richtung der Betätigung des Betätigungselements (35) zur einen oder zur anderen Seite einer Neutralstellung geneigt wird;
einem Paar Schubstangen (22, 22'), wovon jede zwischen das Nockenelement und einem des Paars Schieberventile eingefügt ist;
einem Paar Kolben (29, 29'), die an jeweiligen Zwischenpositionen der Schubstangen in einem flüssigkeitsdichten Zustand befestigt sind;
einem Gehäuse (23), in dem das Nockenelement (21) im oberen Abschnitt angebracht ist, in dem ein Paar Kolbenkammern (50, 50'), wovon jede durch den Kolben in eine an seinem oberen Abschnitt ausgebildete Ölkammer (24a, 24a') und eine an seinem unteren Ende ausgebildete Dämpferkammer (24, 24') getrennt ist, im unteren Abschnitt ausgebildet sind, und in dem ein Paar Drosseln (25a, 25a'), wovon jede eine Verbindung zwischen den Ölkammern (24a, 24a') und den Dämpferkammern (24, 24') zuläßt, sowie ein Paar Federkammern (26, 26'), durch die die Schieberventile verlaufen, in seiner Mitte ausgebildet sind;
einem Paar Trennelemente (30, 30'), die die Kolbenkammern und die Federkammern trennen und durch deren Mitte die Schubstangen longitudinal verlaufen;
einem Paar Dämpfungsfedern (24s, 24s'), die die Kolben in einer Richtung mit Energie beaufschlagen, in der sie sich von den Trennelementen entfernen; und
einem Paar Rückschlagventile (25b, 25b'), die ermöglichen, daß sich das Hydrauliköl aus den Federkammern in die Dämpferkammern bewegt, und verhindern, daß sich das Hydrauliköl von den Dämpferkammern in die Federkammern bewegt.

2. Hydraulisch betätigtes Ventil nach Anspruch 1, wobei die entsprechende Drossel (25a, 25a') am Kolben (29, 29') installiert ist und das entsprechende Rückschlagventil (25b, 25b') am Trennelement (30, 30') installiert ist.

3. Hydraulisch betätigtes Ventil nach Anspruch 1, wobei in dem Gehäuse (23) ein Durchlaß (61, 64, 65) ausgebildet ist, der die Verbindung zwischen dem oberen Raum jeder Ölkammer und dem Tankanschluß erleichtert.

4. Hydraulikvorrichtung zum wahlweisen Erzeugen eines Sekundärdrucks an einem ersten oder zweiten Anschluß (31, 32) entsprechend der Bewegung eines Betätigungselements (35) mittels erster und zweiter Schubstangen (22, 22'), die zwischen dem Betätigungselement (35) und einem ersten bzw. zweiten Schieberventil (28, 28') angeordnet sind, die sich in eine erste bzw. eine zweite Federkammer (26, 26') erstrecken, wobei
erste und zweite Kolben (29, 29'), die an der ersten bzw. an der zweiten Schubstange (22, 22') in einer ersten bzw. einer zweiten Kolbenkammer (50, 50') befestigt sind, eine erste und eine zweite Dämpfungskammer (24, 24') bilden, die mit der ersten bzw. der zweiten Federkammer über ein erstes bzw. ein zweites Rückschlagventil (25b, 25b') in Verbindung stehen, und eine erste bzw. eine zweite Ölkammer (24a, 24a') bilden, die mit der ersten bzw. der zweiten Dämpfungskammer über eine erste bzw. eine zweite Drossel (25a, 25a') in Verbindung stehen.

## Revendications

1. Vanne à commande hydraulique, dans laquelle l'un de deux tiroirs (28, 28') disposés verticalement est déplacé sélectivement par inclinaison d'un organe d'actionnement (35) de telle sorte qu'un orifice de pompe (P) et un orifice de sortie (31) correspondant audit tiroir (28) soient mis en communication l'un avec l'autre par ce dernier, et qu'un autre orifice de sortie (32) et un orifice de réservoir (T) soient mis en communication l'un avec l'autre par l'autre tiroir (28'), pour ainsi génèrer une pression secondaire proportionnelle au degré d'inclinaison de l'organe d'actionnement (35), dans l'un ou l'autre des orifices de sortie correspondant à l'opération d'inclinaison, comprenant :
un organe formant came (21) qui s'incline vers l'un ou l'autre côté d'une position neutre en fonction du degré et du sens d'actionnement de l'organe d'actionnement (35);
deux tiges-poussoirs (22, 22') qui sont chacune intercalées entre l'organe formant came et l'un des deux tiroirs ;
deux pistons (29, 29') fixés au niveau de positions intermédiaires des tiges-poussoirs, respectivement dans un état d'étanchéité à un liquide;
un carter (23) dans la partie supérieure duquel l'organe formant came (21) est monté, dans la partie inférieure duquel deux chambres à piston (50, 50') divisées chacune en une chambre à huile (24a, 24a') formée au niveau de leur partie supérieure par le piston et en une chambre d'amortissement (24, 24') formée au niveau de leur partie inférieure par le piston, sont formées, deux organes d'étranglement (25a, 25a') faisant communiquer les chambres à huile (24a, 24a') et les chambres d'amortissement (24, 24') entre elles, et au centre duquel deux chambres à ressort (26, 26') traversées par les tiroirs sont formées ;
deux organes de séparation (30, 30') qui séparent les chambres à piston et les chambres à ressort, et qui sont traversés longitudinalement par les tiges-poussoirs au niveau de leur centre;
deux ressorts d'amortissement (24s, 24s') qui activent les pistons dans la direction opposée aux organes de séparation ; et
deux clapets anti-retour (25b, 25b') qui permettent à l'huile hydraulique de circuler des chambres à ressort vers les chambres d'amortissement et qui empêchent l'huile hydraulique de circuler des chambres d'amortissement vers les chambres à ressort.

2. Vanne à commande hydraulique selon la revendication 1, dans laquelle l'organe d'étranglement (25a, 25a') correspondant est installé sur le piston (29, 29') et le clapet anti-retour (25b, 25b') correspondant est installé sur l'organe de séparation (30, 30').

3. Vanne à commande hydraulique selon la revendication 1, dans laquelle un passage (61, 64, 65) est formé dans le carter (23) pour faciliter la communication entre l'espace supérieur de chaque chambre à huile et l'orifice de réservoir.

4. Dispositif hydraulique pour fournir sélectivement une pression secondaire au niveau d'un premier ou deuxième orifice (31, 32) en fonction du déplacement d'un organe d'actionnement (35), au moyen de première et deuxième tiges-poussoirs (22, 22') disposées entre l'organe d'actionnement (35) et des premier et deuxième tiroirs (28, 28') respectifs qui s'étendent dans des première et deuxième chambres à ressort (26, 26') respectives, dans lequel
des premier et deuxième pistons (29, 29') fixés respectivement auxdites première et deuxième tiges-poussoirs (22, 22') dans des première et deuxième chambres à piston (50, 50') forment des première et deuxième chambres d'amortissement (24, 24') qui communiquent respectivement avec lesdites première et deuxième chambres à ressort par l'intermédiaire de premier et deuxième clapets anti-retour (25b, 25b'), et des première et deuxième chambres à huile (24a, 24a') qui communiquent respectivement avec lesdites première et deuxième chambres d'amortissement par l'intermédiaire de premier et deuxième organes d'étranglement (25a, 25a').
